# EUROPÄISCHE PATENTSCHRIFT

(11) **EP 3 357 262 B1**
(45) Veröffentlichungstag und Bekanntmachung des Hinweises auf die Patenterteilung: **03.03.2021**
(21) Anmeldenummer: 16774467.1
(22) Anmeldetag: 20.09.2016
(51) Int. Cl.: B60R 25/30, H04L 29/08, H04W 4/40

(54) **KOMMUNIKATIONSSYSTEM ZUR V2X-KOMMUNIKATION**
COMMUNICATIONS SYSTEM FOR V2X COMMUNICATION
SYSTÈME DE COMMUNICATION POUR LA COMMUNICATION V2X

(30) Priorität: 29.09.2015 DE 102015218800
(43) Veröffentlichungstag der Anmeldung: 08.08.2018
(73) Patentinhaber: Continental Teves AG & Co. OHG, 60488 Frankfurt am Main (DE); Continental Automotive GmbH, 30165 Hannover (DE)
(72) Erfinder: STÄHLIN, Ulrich, 65760 Eschborn (DE); MENZEL, Marc, 35096 Weimar (Lahn) (DE); FEHRMANN, Walter, 93051 Regensburg (DE)
(74) Vertreter: Continental Corporation
(86) Internationale Anmeldenummer: PCT/EP2016/072322
(87) Internationale Veröffentlichungsnummer: WO 2017/055142

(56) Entgegenhaltungen:
- US-A1- 2004 003 252
- US-A1- 2015 005 981
- US-B1- 9 083 581
- MAXIM RAYA ET AL: "Securing vehicular ad hoc networks", JOURNAL OF COMPUTER SECURITY, Bd. 15, Nr. 1, 1. Januar 2007 (2007-01-01) , Seiten 39-68, XP055321357, NL ISSN: 0926-227X, DOI: 10.3233/JCS-2007-15103
- Unknown: "TCG TPM 2.0 Automotive Thin Profile", , 16. März 2015 (2015-03-16), XP055321412, Gefunden im Internet: URL:http://www.trustedcomputinggroup.org/w p-content/uploads/TCG-TPM-2.0-Automotive-T hin-Profile_v1.0.pdf [gefunden am 2016-11-21]

## Beschreibung

### TECHNISCHES GEBIET

Die vorliegende Erfindung betrifft das Gebiet der Fahrzeug-zu-X-Kommunikation. Insbesondere betrifft die Erfindung ein Kommunikationssystem zur Fahrzeug-zu-X-Kommunikation, das in einem Kraftfahrzeug an einem Verbauort verbaubar ist.

### TECHNISCHER HINTERGRUND

Fahrzeug-zu-X (vehicle-to-X, V2X) Kommunikation, insbesondere auf Basis der Standards IEEE 802.11p bzw. ITS-G5 oder IEEE 1609, ist Stand der Forschung bzw. Vorentwicklung und befindet sich aktuell in der Standardisierung. Bei der V2X-Kommunikation ist es wichtig, dass Kommunikationssysteme, insbesondere V2X-Antennensysteme, nur dann an der Kommunikation teilnehmen, insbesondere nur dann senden, wenn sie am Verkehr teilnehmen. Dies kann durch eine Public-Key-Infrastruktur (PKI) sichergestellt werden, wobei nur autorisierte und zulässig verbaute Kommunikationssysteme entsprechende PKI-Zertifikate erhalten. Kommunikationssysteme, welche ohne PKI-Zertifikate senden, können auf der Empfängerseite aussortiert werden.

In MAXIM RAYA ET AL: "Securing vehicular ad hoc networks", JOURNAL OF COMPUTER SECURITY, Bd. 15, Nr. 1, 1. Januar 2007 (2007-01-01), Seiten 39-68, XP055321357, NL; ISSN: 0926-227X, DOI: 10.3233/JCS-2007-15103 werden Maßnahmen zur Verbesserung der Informationssicherheit mobiler Ad-hoc Netzwerke vorgestellt.

Aus Unknown: "TCG TPM 2.0 Automotive Thin Profile", 16. März 2015 (2015-03-16), XP055321412, Gefunden im Internet: URL:http://www.trustedcomputinggroup.org/wpcontent/uploads/TCG-TPM-2.0-Automotive-Thin-Profile v1.0.pdf [gefunden am 2016-11-21] geht hervor, wie ein sogenanntes Trusted Platform Module zur Verbesserung der Informationssicherheit eines Informationstechnologiesystems eines Fahrzeugs beitragen kann.

Die US 2015/005981 A1 betrifft eine Zubehör-Einstecksicherheitsvorrichtung, die ermöglicht, dass ein Fahrzeug mit anderen Fahrzeugen oder Infrastrukturen in einem V2X-Kommunikationssystem kommuniziert. Die Vorrichtung enthält ein Funkgerät zum Senden und Empfangen von Signalen und einen GPS-Empfänger zum Empfangen von GPS-Signalen und zum Bereitstellen von Fahrzeugpositionsdaten. Außerdem enthält die Vorrichtung einen Speicher zum Speichern digitaler Sicherheitszertifikate und von Fahrzeuganwendungsdaten und einen Prozessor, der dafür konfiguriert ist, mit einem Fahrzeug-CAN-Bus in elektrische Kommunikation gebracht zu werden. Der Prozessor empfängt von dem GPS-Empfänger Fahrzeugortssignale, Dateien aus dem Speicher und Signale von dem Funkgerät und stellt Signale zur Übertragung an das Funkgerät bereit. Der Prozessor identifiziert das Fahrzeug, mit dem die Einsteckvorrichtung gekoppelt ist, und stellt auf dem CAN-Bus Daten, die die Vorrichtung identifizieren, bereit. Außerdem führt der Prozessor auf der Grundlage des Typs des Fahrzeugs, des Zugriffs auf Fahrzeugsysteme und des Orts des Fahrzeugs Selbstkonfigurationsoperationen aus.

Ferner ist es wichtig zu vermeiden, dass Kommunikationssysteme für die Versendung von Falschinformationen verwendet werden. Hierzu kann ebenfalls die PKI dienen, wobei PKI-Zertifikate, die einen gewissen Zeitraum abdecken, im Kommunikationssystem gespeichert sein können. Wird ein Kommunikationssystem mit noch gültigen PKI-Zertifikaten aus einem Kraftfahrzeug ausgebaut oder an einem unzulässigen Verbauort verbaut, so könnten mit diesem Kommunikationssystem fehlerhafte oder nicht autorisierte Kommunikationsdaten versendet werden. Diese Kommunikationsdaten könnten von dem Kommunikationssystem mit validen PKI-Zertifikaten versehen werden und würden folglich auf der Empfängerseite als Kommunikationsdaten eines zulässig verbauten Kommunikationssystems erkannt. Solche ausgebauten oder unzulässig verbauten Kommunikationssysteme zu erkennen und ihre Nutzung zu verhindern ist schwierig.

### BESCHREIBUNG DER ERFINDUNG

Es ist daher die Aufgabe der vorliegenden Erfindung, ein effizientes und sicheres Konzept für die Fahrzeug-zu-X-Kommunikation zu schaffen.

Diese Aufgabe wird durch die Gegenstände der unabhängigen Ansprüche gelöst. Vorteilhafte Ausführungsformen der Erfindung sind Gegenstand der abhängigen Ansprüche, der Beschreibung sowie der Figuren.

Gemäß einem ersten Aspekt betrifft die Erfindung ein Kommunikationssystem zur V2X-Kommunikation, das in einem Kraftfahrzeug an einem Verbauort verbaubar ist, mit einem Empfänger zum Empfang von Kommunikationsdaten, und einem Prozessor, welcher ausgebildet ist, eine Charakteristik der empfangenen Kommunikationsdaten zu erfassen, wobei der Prozessor ausgebildet ist, die Anordnung des Kommunikationssystems an dem Verbauort auf der Basis eines Vergleichs der erfassten Charakteristik mit einer Referenzcharakteristik zu überprüfen. Dadurch wird der technische Vorteil erreicht, dass die Anordnung des Kommunikationssystems an dem Verbauort effizient und im laufenden Betrieb des Kommunikationssystems geprüft werden kann. Auf diese Art und Weise kann eine unzulässige Anordnung, beispielsweise eine Anordnung an einem unzulässigen Verbauort, oder eine Verbauung in einem Fremdfahrzeug effizient detektiert werden. Erfindungsgemäß ist der V2X-Sender ausgebildet, die Kommunikationsdaten nicht auszusenden, wenn der Prozessor eine unzulässige Anordnung des Kommunikationssystems feststellt. Dadurch wird der technische Vorteil erreicht, dass ein Aussenden von Kommunikationsdaten eines unzulässig verbauten Kommunikationssystems effizient vermieden werden kann.

Der Verbauort des Kommunikationssystems kann in oder an einem Dach des Kraftfahrzeugs, einer Front- oder Heckscheibe des Kraftfahrzeugs, einer A-, B- oder C-Säule, einer Frontschürze, einer Heckklappe, einem Außen- oder Innenspiegel oder einer Leuchte des Kraftfahrzeugs sein. Ferner kann der Verbauort des Kommunikationssystems in einem Motorraum, einem Kofferraum oder einem Fahrzeuginnenraum, beispielsweise in einer Konsole im Fahrzeuginnenraum des Kraftfahrzeugs, sein.

Das Kommunikationssystem kann eine oder eine Vielzahl an aktiven oder passiven Antennen umfassen, welche für die V2X-Kommunikation, beispielsweise mit weiteren Kraftfahrzeugen, ausgebildet sein können.

Gemäß einer Ausführungsform des Kommunikationssystems sind die Charakteristik der empfangenen Kommunikationsdaten und die Referenzcharakteristik eine der folgenden Charakteristika: Datentyp, Daten-ID, Wiederholrate der Kommunikationsdaten, Datenrate der Kommunikationsdaten, Signalstärke der Kommunikationsdaten.

Gemäß einer Ausführungsform des Kommunikationssystems ist der Prozessor ausgebildet, eine unzulässige Anordnung des Kommunikationssystems festzustellen, wenn sich die Charakteristik der empfangenen Kommunikationsdaten von der Referenzcharakteristik unterscheidet. Dadurch wird der technische Vorteil erreicht, dass eine effiziente Detektion einer unzulässigen Anordnung des Kommunikationssystems erfolgen kann. Die von dem Kommunikationssystem empfangenen Kommunikationsdaten können beispielsweise von Fahrzeugsystemen des Kraftfahrzeugs stammen und eine eindeutige Daten-ID umfassen, welche sich dem Fahrzeugsystem, dem Kraftfahrzeug oder einem Kraftfahrzeugmodel zuordnen lässt. Unterscheidet sich die Daten-ID von einer erwarteten Referenz-ID, so kann auf eine unzulässige Anordnung des Kommunikationssystems in einem Fremdfahrzeug geschlossen werden.

Gemäß einer Ausführungsform des Kommunikationssystems umfasst die Referenzcharakteristik ein vorbekanntes Signal, insbesondere ein Airbagsignal, und ist der Prozessor ausgebildet, eine unzulässige Anordnung des Kommunikationssystems festzustellen, wenn die Kommunikationsdaten das vorbekannte Signal umfassen. Dadurch wird der technische Vorteil erreicht, dass eine effiziente Detektion einer unzulässigen Anordnung erfolgen kann. Das vorbestimmte Signal kann ein Auslösesignal eines Airbags sein und kann auf einen Unfall des Kraftfahrzeugs hinweisen. Da ein verunfalltes Kraftfahrzeug meist nicht mehr am Verkehr teilnehmen kann, ist es beispielsweise nicht mehr für die Nutzung des Kommunikationssystems zur V2X-Kommunikation autorisiert. Somit kann die Anordnung des Kommunikationssystems in dem Kraftfahrzeug unzulässig sein.

Gemäß einer Ausführungsform des Kommunikationssystems umfasst die Referenzcharakteristik ein weiteres vorbekanntes Signal, insbesondere ein Signal eines schwer ausbaubaren Fahrzeugsystems, und ist der Prozessor ausgebildet, eine unzulässige Anordnung des Kommunikationssystems festzustellen, wenn die Kommunikationsdaten das weitere vorbekannte Signal nicht umfassen. Dadurch wird der technische Vorteil erreicht, dass eine effiziente Detektion einer unzulässigen Anordnung des Kommunikationssystems erfolgen kann. Das weitere vorbekannte Signal kann ein Steuersignal eines schwer ausbaubaren Steuergerätes des Kraftfahrzeugs sein. Wird das weitere vorbekannte Signal nicht von dem Prozessor detektiert, kann auf eine unzulässige Anordnung des Kommunikationssystems außerhalb des Kraftfahrzeugs, beispielsweise in einem Fremdfahrzeug, geschlossen werden.

Gemäß einer Ausführungsform des Kommunikationssystems umfassen die empfangenen Kommunikationsdaten Positionsdaten und ist die Charakteristik der Kommunikationsdaten eine Entfernung der Positionsdaten zum Kraftfahrzeug, insbesondere zum Kommunikationssystem des Kraftfahrzeugs, und ist die Referenzcharakteristik eine Referenzentfernung, wobei der Prozessor ausgebildet ist, eine unzulässige Anordnung des Kommunikationssystems festzustellen, wenn der Unterschied zwischen Entfernung und Referenzentfernung einen Schwellwert überschreitet oder unterschreitet. Dadurch wird der technische Vorteil erreicht, dass eine effiziente Detektion einer unzulässigen Anordnung des Kommunikationssystems erfolgen kann.

Bei den Positionsdaten kann es sich um Positionsdaten anderer Kraftfahrzeuge, insbesondere anderer Kraftfahrzeuge mit Kommunikationssystem zur V2X-Kommunkation, handeln, welche vom Kommunikationssystem des Kraftfahrzeugs empfangen werden können. Die Positionsdaten können GNSS-Daten umfassen. Die Entfernung kann die Entfernung zwischen dem Kraftfahrzeug, insbesondere zwischen dem Kommunikationssystem des Kraftfahrzeugs, und einem anderen Kraftfahrzeug, insbesondere einem anderen Kommunikationssystem des anderen Kraftfahrzeugs, sein. Eine unzulässige Anordnung des Kommunikationssystems, beispielweise an der Fahrzeugrück- statt an der Fahrzeugvorderseite kann sich auf die erfasste Entfernung auswirken. Der Schwellwert kann eine maximale Entfernung oder eine minimale Entfernung sein.

Gemäß einer Ausführungsform des Kommunikationssystems ist der Prozessor ausgebildet, auf Basis der Positionsdaten eine digitale Karte zu erzeugen und die digitale Karte mit einer Referenzkarte zu vergleichen, um die Anordnung des Kommunikationssystems an dem Verbauort zu überprüfen. Dadurch wird der technische Vorteil erreicht, dass eine effiziente Überprüfung der Anordnung des Kommunikationssystems auf Basis der Positionsdaten erfolgen kann.

Gemäß einer Ausführungsform des Kommunikationssystems ist der Prozessor ausgebildet, die Anordnung des Kommunikationssystems an dem Verbauort zyklisch oder kontinuierlich zu überprüfen. Dadurch wird der technische Vorteil erreicht, dass eine unzulässige Anordnung des Kommunikationssystems effizient und selbstständig von dem Kommunikationssystem detektiert werden kann.

Gemäß einer Ausführungsform des Kommunikationssystems ist der Empfänger ein BUS-Empfänger oder ein V2X-Empfänger. Dadurch wird der technische Vorteil erreicht, dass der Empfänger zum Empfang von Kommunikationsdaten mit einem BUS-Kommunikationsnetzwerk oder einem V2X-Kommunikationsnetzwerk kommunikationstechnisch verbunden sein kann.

Die Kommunikationsdaten können Systemdaten von Fahrzeugsystemen, insbesondere Steuergeräte oder Sensoren, des Kraftfahrzeugs, oder V2X-Kommunikationsdaten von anderen Kraftfahrzeugen umfassen.

Gemäß einer Ausführungsform des Kommunikationssystems umfasst das Kommunikationssystem einen V2X-Sender, der zum Aussenden der empfangenen Kommunikationsdaten ausgebildet ist. Dadurch wird der technische Vorteil erreicht, dass die empfangenen Kommunikationsdaten effizient ausgesendet und anderen Empfängern, beispielsweise anderen Kraftfahrzeugen, zur Verfügung gestellt werden können.

Gemäß einer Ausführungsform des Kommunikationssystems ist der Prozessor ausgebildet, die Kommunikationsdaten vor dem Aussenden mit einem PKI-Zertifikat zu signieren, sofern der Prozessor keine unzulässige Anordnung des Kommunikationssystems feststellt, und die Kommunikationsdaten vor dem Aussenden nicht mit dem PKI-Zertifikat zu signieren, wenn der Prozessor eine unzulässige Anordnung des Kommunikationssystems feststellt. Dadurch wird der technische Vorteil erreicht, dass eine effiziente Authentifizierung von Kommunikationsdaten, welche von einem zulässig angeordneten Kommunikationssystem ausgesendet werden, mittels PKI-Zertifikat erfolgen kann.

Gemäß einer Ausführungsform des Kommunikationssystems umfasst das Kommunikationssystem einen Speicher, in welchem eine Anzahl an PKI-Zertifikaten zum Signieren der Kommunikationsdaten gespeichert ist, und ist der Prozessor ausgebildet, bei Feststellen einer unzulässigen Anordnung des Kommunikationssystems die PKI-Zertifikate aus dem Speicher zu löschen. Dadurch wird der technische Vorteil erreicht, dass die PKI-Zertifikate eines ausgebauten oder anderweitig unzulässig angeordneten Kommunikationssystems nicht mehr zur Signierung von Kommunikationsdaten zur Verfügung stehen können.

Gemäß einer Ausführungsform des Kommunikationssystems ist der Prozessor ausgebildet, die PKI-Zertifikate nach Ablauf einer bestimmten Zeit nach Feststellen einer unzulässigen Anordnung aus dem Speicher zu löschen. Dadurch wird der technische Vorteil erreicht, dass PKI-Zertifikate erst gelöscht werden, wenn eine unzulässige Anordnung des Kommunikationssystems feststeht. Somit kann eine kurzfristige weitere Nutzung des Kommunikationssystems, beispielsweise bis zur Inspektion des Kraftfahrzeugs in einer Werkstatt, ermöglicht werden.

Gemäß einer Ausführungsform des Kommunikationssystems ist der Prozessor ausgebildet, bei Feststellen eines unzulässigen Verbauorts des Kommunikationssystems die Kommunikationsdaten zu speichern. Das Speichern kann beispielsweise in dem Speicher des Kommunikationssystems oder einem weiteren Speicher des Kraftfahrzeugs erfolgen. Dadurch wird der technische Vorteil erreicht, dass nach der Detektion der unzulässigen Anordnung des Kommunikationssystems nachvollzogen werden kann, welche Kommunikationsdaten die Detektion verursacht haben.

Gemäß einer Ausführungsform des Kommunikationssystems ist der V2X-Sender ausgebildet, eine Fehlermeldung auszusenden, wenn der Prozessor einer unzulässigen Anordnung des Kommunikationssystems feststellt. Dadurch wird der technische Vorteil erreicht, dass andere Entitäten im V2X-Kommunikationsnetzwerk effizient über die unzulässige Anordnung des Kommunikationssystems informiert werden können. Das Aussenden der Fehlermeldung kann beispielsweise zu einer Zertifikat-Revokation der PKI-Zertifikate des unzulässig angeordneten Kommunikationssystems in einem PKI-System führen.

Gemäß einer Ausführungsform des Kommunikationssystems umfasst das Kommunikationssystem eine Anzahl an Sensorelementen, wobei die Anzahl an Sensorelementen zur Übertragung von Sensordaten an den Prozessor ausgebildet ist. Dadurch wird der technische Vorteil erreicht, dass neben den Kommunikationsdaten auch Sensordaten zum Überprüfen der Anordnung des Kommunikationssystems vorliegen. Die Anzahl an Sensorelementen kann zumindest ein Temperatursensorelement umfassen.

Gemäß einer Ausführungsform des Kommunikationssystems ist der Prozessor ausgebildet, eine Charakteristik der empfangenen Sensordaten zu erfassen und die erfasste Charakteristik der Sensordaten mit einer weiteren Referenzcharakteristik zu vergleichen, um die Anordnung des Kommunikationssystems an dem Verbauort zu überprüfen. Dadurch wird der technische Vorteil erreicht, dass die Charakteristik der Sensordaten effizient zum Überprüfen der Anordnung des Kommunikationssystems verwendet werden kann. Bei der Charakteristik der Sensordaten und der weiteren Referenzcharakteristik kann es sich um Temperaturprofile handeln.

Gemäß einem zweiten Aspekt betrifft die Erfindung ein Verfahren zur V2X-Kommunikation mit einem Kommunikationssystem, das in einem Kraftfahrzeug an einem Verbauort verbaubar ist, mit Empfangen von Kommunikationsdaten, Erfassen einer Charakteristik der empfangenen Kommunikationsdaten mit einem Prozessor, und Überprüfen der Anordnung des Kommunikationssystems an dem Verbauort auf der Basis eines Vergleichs der erfassten Charakteristik mit einer Referenzcharakteristik, wobei das Kommunikationssystem einen V2X-Sender umfasst, der zum Aussenden der empfangenen Kommunikationsdaten ausgebildet ist, wobei die Kommunikationsdaten durch den V2X-Sender nicht ausgesendet werden, wenn der Prozessor eine unzulässige Anordnung des Kommunikationssystems feststellt. Dadurch wird der technische Vorteil erreicht, dass die Anordnung des Kommunikationssystems an dem Verbauort effizient geprüft werden kann und ein Aussenden von Kommunikationsdaten eines unzulässig verbauten Kommunikationssystems kann effizient vermieden werden.

Die Erfindung kann in Hardware und/oder Software realisiert werden.

### BESCHREIBUNG DER FIGUREN

Weitere Ausführungsbeispiele werden bezugnehmend auf die beiliegenden Figuren näher erläutert. Es zeigen:
Fig. 1a eine schematische Darstellung eines Kommunikationssystems;
Fig. 1b eine schematische Darstellung eines Kommunikationssystems;
Fig. 2 eine schematische Darstellung eines Kommunikationssystems mit einem Sensorelement; und
Fig. 3 ein Diagramm eines Verfahrens zur V2X-Kommunikation mit einem Kommunikationssystem.

### DETAILIERTE BESCHREIBUNG DER FIGUREN

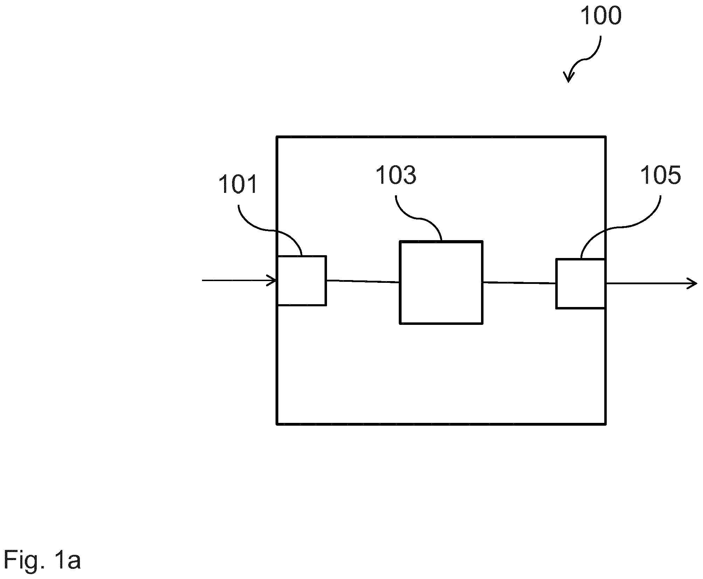

Fig. 1a zeigt ein Kommunikationssystem 100 zur V2X-Kommunikation gemäß einer Ausführungsform.

Das Kommunikationssystem 100 zur V2X-Kommunikation, welches in einem Kraftfahrzeug an einem Verbauort verbaubar ist, umfasst einen Empfänger 101 zum Empfang von Kommunikationsdaten, und einen Prozessor 103, welcher ausgebildet ist, eine Charakteristik der empfangenen Kommunikationsdaten zu erfassen, wobei der Prozessor 103 ausgebildet ist, die Anordnung des Kommunikationssystems 100 an dem Verbauort auf der Basis eines Vergleichs der erfassten Charakteristik mit einer Referenzcharakteristik zu überprüfen. Das Kommunikationssystem 100 in Fig. 1a umfasst ferner einen V2X-Sender 105 zum Aussenden der Kommunikationsdaten.

Der Verbauort des Kommunikationssystems 100 kann in oder an einem Dach des Kraftfahrzeugs, einer Front- oder Heckscheibe des Kraftfahrzeugs, einer A-, B- oder C-Säule, einer Frontschürze, einer Heckklappe, einem Außen- oder Innenspiegel oder einer Leuchte des Kraftfahrzeugs sein. Ferner kann der Verbauort des Kommunikationssystems 100 in einem Motorraum, einem Kofferraum oder einem Fahrzeuginnenraum, beispielsweise in einer Konsole im Fahrzeuginnenraum des Kraftfahrzeugs, sein. Das Kommunikationssystem 100 kann eine oder eine Vielzahl an aktiven oder passiven Antennen umfassen, welche für die V2X-Kommunikation, beispielsweise mit weiteren Kraftfahrzeugen, ausgebildet sein können.

Der Empfänger 101 kann ein V2X-Empfänger oder ein BUS-Empfänger sein. Der Empfänger 101 kann zum Empfang von Kommunikationsdaten mit einem BUS-Kommunikationsnetzwerk oder einem V2X-Kommunikationsnetzwerk ausgebildet sein. Die Kommunikationsdaten können Systemdaten von Fahrzeugsystemen, insbesondere Steuergeräte oder Sensoren, des Kraftfahrzeugs, oder V2X-Kommunikationsdaten von anderen Kraftfahrzeugen umfassen.

Gemäß einer Ausführungsform ist die Charakteristik der empfangenen Kommunikationsdaten und die Referenzcharakteristik eine der folgenden Charakteristika: Datentyp, Daten-ID, Wiederholrate der Kommunikationsdaten, Datenrate der Kommunikationsdaten, Signalstärke der Kommunikationsdaten.

Der Prozessor 103 kann eine unzulässige Anordnung des Kommunikationssystems 100 feststellen, wenn sich die Charakteristik der empfangenen Kommunikationsdaten von der Referenzcharakteristik unterscheidet. Die von dem Kommunikationssystem 100 empfangenen Kommunikationsdaten können beispielsweise von Fahrzeugsystemen des Kraftfahrzeugs stammen und eine eindeutige Daten-ID bzw. Botschafts-ID umfassen, welche sich dem Fahrzeugsystem, dem Kraftfahrzeug oder einem Kraftfahrzeugmodel zuordnen lässt. Unterscheidet sich die Daten-ID von einer erwarteten Referenz-ID, so kann auf eine unzulässige Anordnung des Kommunikationssystems 100 in einem Fremdfahrzeug geschlossen werden. Unterscheidet sich die Wiederholrate der Kommunikationsdaten von den Referenz-Wiederholraten, so kann ebenfalls auf eine unzulässige Anordnung des Kommunikationssystems 100 in einem Fremdfahrzeug geschlossen werden. Nach selbigem Muster kann mit den anderen Charakteristika verfahren werden.

Der Prozessor 103 kann ferner ausgebildet sein, die Kommunikationsdaten vor dem Aussenden mittels des V2X-Senders 105 mit einem PKI-Zertifikat zu signieren, sofern er keine unzulässige Anordnung des Kommunikationssystems 100 feststellt. Ferner kann der Prozessor 103 ausgebildet sein, die Kommunikationsdaten nicht mit dem PKI-Zertifikat zu signieren, wenn er eine unzulässige Anordnung des Kommunikationssystems 100 feststellt.

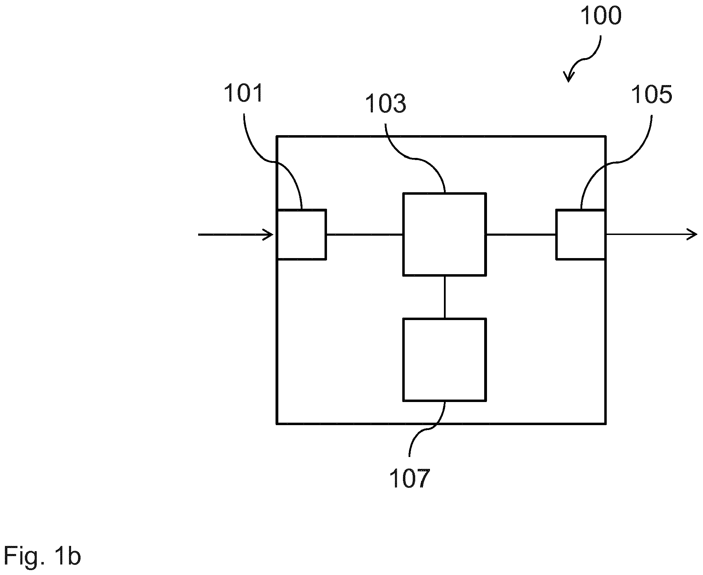

Fig. 1b zeigt das Kommunikationssystem 100 zur V2X-Kommunikation gemäß einer weiteren Ausführungsform. Das Kommunikationssystem 100 in Fig. 1b umfasst einen Speicher 107.

Der Speicher 107 kann zum Speichern der Referenzcharakteristik ausgebildet sein. Ferner kann der Speicher 107 zum Speichern der PKI-Zertifikate zur Signatur der Kommunikationsdaten ausgebildet sein.

Gemäß einer weiteren Ausführungsform umfasst die Referenzcharakteristik ein vorbekanntes Signal, insbesondere ein Airbagsignal bzw. ein Auslösesignal eines Airbags.
Der Prozessor 103 kann eine unzulässige Anordnung des Kommunikationssystems 100 feststellen, wenn die Kommunikationsdaten das vorbekannte Signal umfassen. Das Airbagsingal kann auf einen Unfall des Kraftfahrzeugs hinweisen. Da ein verunfalltest Kraftfahrzeug meist nicht mehr am Verkehr teilnehmen kann, ist es beispielsweise nicht mehr für die Nutzung des Kommunikationssystems 100 zur V2X-Kommunikation autorisiert. Somit kann die Anordnung des Kommunikationssystems 100 in dem Kraftfahrzeug unzulässig sein

Gemäß einer weiteren Ausführungsform umfasst die Referenzcharakteristik ein weiteres vorbekanntes Signal, insbesondere ein Signal eines schwer oder gar nicht ausbaubaren Fahrzeugsystems. Bei dem schwer oder gar nicht ausbaubaren Fahrzeugsystem kann es sich um ein Motorsteuergerät oder ein Kombiinstrument handeln. Der Prozessor 103 eine unzulässige Anordnung des Kommunikationssystems 100 feststellt, wenn die Kommunikationsdaten das weitere vorbekannte Signal nicht umfassen.

Gemäß einer Ausführungsform des Kommunikationssystems 100 ist der Prozessor 103 ausgebildet, bei Feststellen einer unzulässigen Anordnung des Kommunikationssystems 100 die gespeicherten PKI-Zertifikate zu löschen. Die PKI-Zertifikate können in dem Speicher 107 des Kommunikationssystems 100 oder in einem weiteren Speicher des Kraftfahrzeugs gespeichert sein.

Der Prozessor 103 kann ausgebildet sein, die PKI-Zertifikate nach einer vorgegebenen Zeit, beispielsweise 8 Stunden nach Empfang des Airbagsingals, zu löschen, so dass keine signierten Kommunikationsdaten mehr versendet werden können.

Gemäß einer weiteren Ausführungsform umfassen die PKI-Zertifikate Pseudonyme und/oder Long-Term-Certificates (LTC), welche in dem Speicher 107 des Kommunikationssystems 100 gespeichert sein können.

Gemäß einer weiteren Ausführungsform ist der Prozessor 103 ausgebildet, bei Feststellen eines unzulässigen Verbauorts des Kommunikationssystems 100 die Kommunikationsdaten, deren Charakteristika auf eine unzulässige Anordnung des Kommunikationssystems 100 hinweisen, in dem Speicher 107 zu speichern.

Gemäß einer weiteren Ausführungsform ist der Prozessor 103 ausgebildet, das Aussenden der Kommunikationsdaten bei Feststellen einer unzulässigen Anordnung des Kommunikationssystems 100 zu unterbinden.

Gemäß einer Ausführungsform ist der V2X-Sender 105 ausgebildet, eine Fehlermeldung auszusenden, wenn der Prozessor 103 einer unzulässigen Anordnung des Kommunikationssystems 100 feststellt. Das Aussenden der Fehlermeldung kann beispielsweise zu einer Zertifikat-Revokation der PKI-Zertifikate des unzulässig angeordneten Kommunikationssystems 100 in einem PKI-System führen. Das Aussenden der Fehlermeldung kann vor einer Löschung der PKI-Zertifikate aus dem Speicher 107 erfolgen. Das Aussenden der Fehlermeldung kann ebenfalls erst nach der vorgegebenen Zeit erfolgen, beispielsweise 8 Stunden nach Empfang des Airbagsignals.

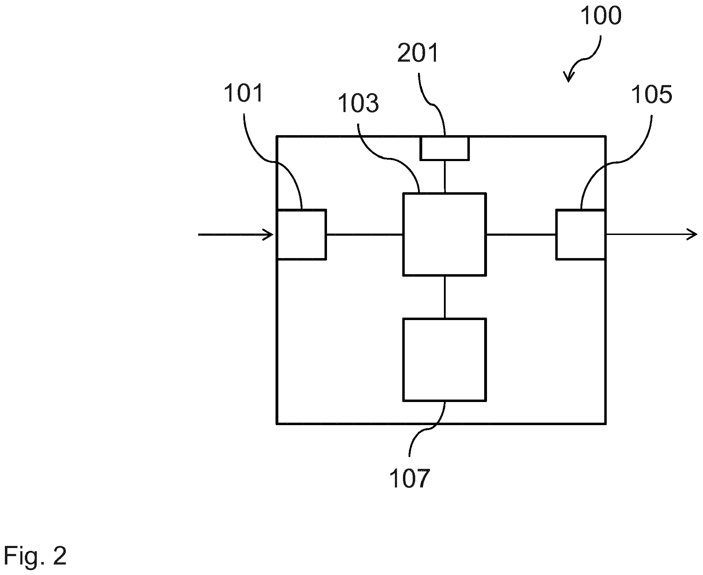

Fig. 2 zeigt ein Kommunikationssystem 100 mit einem Sensorelement 201 gemäß einer Ausführungsform.

Das Sensorelement 201 kann ein Temperatursensor sein, welcher Sensordaten, insbesondere Temperaturwerte, an den Prozessor 103 weiterleitet. Der Prozessor 103 kann ausgebildet sein, auf der Basis der Temperaturwerte ein Temperaturprofil zu ermitteln und das Temperaturprofil mit einer Anzahl an Referenztemperaturprofilen zu vergleichen, wobei die Anzahl an Referenztemperaturprofilen in dem Speicher 107 gespeichert sein können.

Die Anzahl an Referenztemperaturprofilen kann während der Entwicklung und/oder Herstellung des Kommunikationssystems 100 ermittelt und in dem Speicher 107 gespeichert werden. Dabei können Referenztemperaturprofile für unterschiedliche Anordnungen und/oder Umgebungsbedingungen und/oder Betriebssituationen des Kommunikationssystems 100 und/oder des Kraftfahrzeugs ermittelt und gespeichert werden. Beispielsweise können Referenztemperaturprofile für unterschiedliche Tageszeiten, Verwendungsdauern und/oder Verwendungsintensität des Kommunikationssystems 100, Geschwindigkeiten des Kraftfahrzeugs, Wetterbedingungen wie beispielsweise Regenmengen oder Verbauorten des Kommunikationssystems 100 im Kraftfahrzeug, beispielsweise auf dem Fahrzeugdach oder im Fahrzeuginnenraum, vorliegen. Ferner können Referenztemperaturprofile für eine unterschiedliche Anzahl an Personen im Fahrzeuginnenraum, unterschiedliche Beladungen des Kraftfahrzeugs, unterschiedliche Einstellungen einer Klimaanlage im Kraftfahrzeug oder für das Vorhandensein von an oder auf dem Kraftfahrzeug montierten Vorrichtungen, beispielsweise Dachgepäckträgern, vorliegen. Der Prozessor 103 kann ausgebildet sein, das Temperaturprofil mit denjenigen Referenztemperaturprofilen der Anzahl an Referenztemperaturprofilen zu vergleichen, welche zu einer aktuellen Anordnung und/oder Umgebungsbedingung und/oder Betriebssituation des Kommunikationssystems 100 passen oder diesen am ähnlichsten sind.

Gemäß einer Ausführungsform umfasst das Kommunikationssystem 100 weitere Sensorelemente, insbesondere weitere Temperatursensorelemente und/oder Regensensorelemente.

Gemäß einer weiteren Ausführungsform umfassen das Kommunikationssystem 100 und/oder der V2X-Sender 105 eine oder eine Anzahl an aktiven oder passiven Antennen oder ein Antennensystem.

Gemäß einer weiteren Ausführungsform des Kommunikationssystems 100 ist der Prozessor 103 ausgebildet, die Anordnung des Kommunikationssystems 100 an dem Verbauort kontinuierlich oder zyklisch, beispielsweise in Form einer zyklisch durchgeführten Selbstdiagnose des Kommunikationssystems 100, zu überprüfen.

Gemäß einer weiteren Ausführungsform ist der Prozessor 103 ausgebildet, auf Basis der Charakteristika der empfangen Kommunikationsdaten eine digitale Karte zu erzeugen. Der Prozessor 103 kann ausgebildet sein, die digitale Karte auf Basis einer Entfernung und/oder einer Richtung von Sendern der Kommunikationsdaten zum Kommunikationssystem 100 und/oder einer Signalstärke der Kommunikationsdaten zu erzeugen. Die hierbei verwenden Kommunikationsdaten können beispielsweise Kommunikationsdaten von anderen Kraftfahrzeugen mit weiteren Kommunikationssystemen zur V2X-Kommunikation sein. Die Entfernung und/oder die Richtung kann eine Entfernung und/oder Richtung des Kommunikationssystems 100 des Kraftfahrzeugs zu den weiteren Kommunikationssystemen der anderen Kraftfahrzeuge sein.

Die Entfernung und/oder die Richtung der Sender kann auf Basis der empfangenen Kommunikationsdaten ermittelt werden. Die Kommunikationsdaten können hierzu Positionsdaten, insbesondere GNSS-Daten, umfassen. Der Prozessor 103 kann ausgebildet sein, die Positionsdaten der empfangenen Kommunikationsdaten mit eigenen Positionsdaten zu vergleichen um die Entfernung und die Richtung zu ermitteln. Die Entfernung kann eine Entfernung zwischen dem Kraftfahrzeug, insbesondere zwischen dem Kommunikationssystem 100 des Kraftfahrzeugs, und einem anderen Kraftfahrzeug bzw. einem anderen Kommunikationssystems des anderen Kraftfahrzeugs, sein.

Das Kommunikationssystem 100 kann zum Erfassen der eigenen Positionsdaten einen Positionssensor, insbesondere einen GNSS-Sensor, umfassen oder mit einem Positionssensor des Kraftfahrzeugs kommunikationstechnisch verbunden sein.

Die digitale Karte kann auch auf Basis von Empfangsfeldstärken aufgebaut werden bzw. diese zusätzlich zu den Positionsinformationen beinhalten. Zusätzlich kann noch die Empfangsrichtung verwendet werden, was sich vor allem bei der Verwendung von zwei Antennen mit sogenanntem Diversity-Modus vorteilhaft einsetzen lässt.

Der Prozessor 103 kann ausgebildet sein, die digitale Karte nach jedem Neustart des Kommunikationssystems 100 oder des Kraftfahrzeugs neu zu erzeugen. Ferner kann der Prozessor 103 ausgebildet sein, die digitale Karte kontinuierlich mit einer während der Entwicklung erstellten Referenzkarte zu vergleichen. Überschreiten die Abweichungen zwischen der Referenzkarte und der digitalen Karte einen Schwellwert, so kann auf eine unzulässige Anordnung des Kommunikationssystems 100 geschlossen werden.

Gemäß einer Ausführungsform ist die Referenzkarte in dem Speicher 107 gespeichert. Ferner können weitere Referenzkarten für unterschiedliche Verbauorte des Kommunikationssystems 100, beispielsweise Dachgepäckträger, Anhänger oder Zusatzseitenspiegel, vorliegen. Die weiteren Referenzkarten können ebenfalls in dem Speicher 107 gespeichert sein.

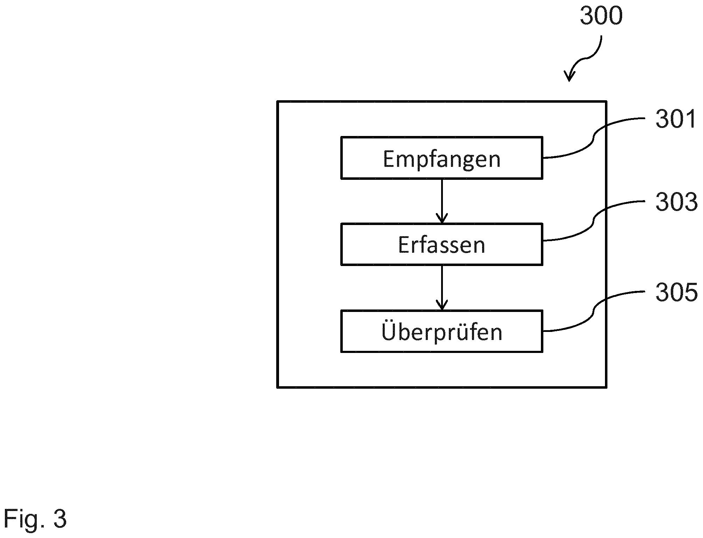

Fig. 3 zeigt ein Diagramm eines Verfahrens 300 zur V2X-Kommunikation gemäß einer Ausführungsform.

Das Verfahren 300 zur V2X-Kommunikation mit dem Kommunikationssystem 100, das in dem Kraftfahrzeug an dem Verbauort verbaubar ist, umfasst das Empfangen 301 der Kommunikationsdaten, das Erfassen 303 der Charakteristik der empfangenen Kommunikationsdaten mit dem Prozessor 103, und das Überprüfen 305 der Anordnung des Kommunikationssystems 100 an dem Verbauort auf der Basis eines Vergleichs der erfassten Charakteristik mit einer Referenzcharakteristik.

### BEZUGSZEICHENLISTE

- 100: Kommunikationssystem
- 101: Empfänger
- 103: Prozessor
- 105: V2X-Sender
- 107: Speicher

- 201: Sensorelement

- 300: Verfahren zur V2X-Kommunikation
- 301: Empfangen
- 303: Erfassen
- 305: Überprüfen

## Patentansprüche

1. Kommunikationssystem (100) zur V2X-Kommunikation, das in einem Kraftfahrzeug an einem Verbauort verbaubar ist, mit:
einem Empfänger (101) zum Empfang von Kommunikationsdaten;
einen V2X-Sender (105), der zum Aussenden der empfangenen Kommunikationsdaten ausgebildet ist; und
einem Prozessor (103), welcher ausgebildet ist, eine Charakteristik der empfangenen Kommunikationsdaten zu erfassen, **dadurch gekennzeichnet, dass** der Prozessor (103) ausgebildet ist, die Anordnung des Kommunikationssystems (100) an dem Verbauort auf der Basis eines Vergleichs der erfassten Charakteristik mit einer Referenzcharakteristik zu überprüfen und wobei der V2X-Sender (105) ausgebildet ist, die Kommunikationsdaten nicht auszusenden, wenn der Prozessor (103) eine unzulässige Anordnung des Kommunikationssystems feststellt.

2. Kommunikationssystem (100) nach einer der vorstehenden Ansprüche, wobei die Charakteristik der empfangenen Kommunikationsdaten und die Referenzcharakteristik eine der folgenden Charakteristika sind: Datentyp, Daten-ID, Wiederholrate der Kommunikationsdaten, Datenrate der Kommunikationsdaten, Signalstärke der Kommunikationsdaten.

3. Kommunikationssystem (100) nach Anspruch 1 oder 2, wobei der Prozessor (103) ausgebildet ist, eine unzulässige Anordnung des Kommunikationssystems (100) festzustellen, wenn sich die Charakteristik der empfangenen Kommunikationsdaten von der Referenzcharakteristik unterscheidet.

4. Kommunikationssystem (100) nach einem der vorstehenden Ansprüche, wobei die Referenzcharakteristik ein vorbekanntes Signal, insbesondere ein Airbagsignal, umfasst, und wobei der Prozessor (103) ausgebildet ist, eine unzulässige Anordnung des Kommunikationssystems (100) festzustellen, wenn die Kommunikationsdaten das vorbekannte Signal umfassen.

5. Kommunikationssystem (100) nach einem der vorstehenden Ansprüche, wobei die Referenzcharakteristik ein weiteres vorbekanntes Signal umfasst, und wobei der Prozessor (103) ausgebildet ist, eine unzulässige Anordnung des Kommunikationssystems (100) festzustellen, wenn die Kommunikationsdaten das weitere vorbekannte Signal nicht umfassen.

6. Kommunikationssystem (100) nach einem der vorstehenden Ansprüche, wobei die
empfangenen Kommunikationsdaten Positionsdaten umfassen, und wobei die Charakteristik der Kommunikationsdaten eine Entfernung der Positionsdaten zum Kraftfahrzeug, insbesondere zum Kommunikationssystem (100) des Kraftfahrzeugs, ist, und wobei die Referenzcharakteristik eine Referenzentfernung ist, wobei der Prozessor (103) ausgebildet ist, eine unzulässige Anordnung des Kommunikationssystems (100) festzustellen, wenn der Unterschied zwischen Entfernung und Referenzentfernung einen Schwellwert überschreitet oder unterschreitet.

7. Kommunikationssystem (100) nach einem der vorstehenden Ansprüche, wobei der Prozessor (103) ausgebildet ist, die Anordnung des Kommunikationssystems (100) an dem Verbauort zyklisch oder kontinuierlich zu überprüfen.

8. Kommunikationssystem (100) nach einem der vorstehenden Ansprüche, wobei der Empfänger (101) ein BUS-Empfänger oder ein V2X-Empfänger ist.

9. Kommunikationssystem (100) nach Anspruch 8, wobei der Prozessor (103) ausgebildet ist, die Kommunikationsdaten vor dem Aussenden mit einem PKI-Zertifikat zu signieren, sofern der Prozessor (103) keine unzulässige Anordnung des Kommunikationssystems (100) feststellt, und die Kommunikationsdaten vor dem Aussenden nicht mit dem PKI-Zertifikat zu signieren, wenn der Prozessor (103) eine unzulässige Anordnung des Kommunikationssystems (100) feststellt.

10. Kommunikationssystem (100) nach Anspruch 9, wobei das Kommunikationssystem (100) einen Speicher (107) umfasst, in welchem eine Anzahl an PKI-Zertifikaten zum Signieren der Kommunikationsdaten gespeichert ist, wobei der Prozessor (103) ausgebildet ist, bei Feststellen einer unzulässigen Anordnung des Kommunikationssystems (100) die PKI-Zertifikate aus dem Speicher (107) zu löschen.

11. Kommunikationssystem (100) nach Anspruch 10, wobei der Prozessor (103) ausgebildet ist, die PKI-Zertifikate nach Ablauf einer bestimmten Zeit nach Feststellen einer unzulässigen Anordnung aus dem Speicher (107) zu löschen.

12. Kommunikationssystem (100) nach einem der Ansprüche 1 bis 11, wobei der V2X-Sender (105) ausgebildet ist, eine Fehlermeldung auszusenden, wenn der Prozessor (103) eine unzulässige Anordnung des Kommunikationssystems (100) feststellt.

13. Kommunikationssystem (100) nach einem der vorstehenden Ansprüche, wobei das Kommunikationssystem (100) eine Anzahl an Sensorelementen (201) umfasst, wobei die Anzahl an Sensorelementen (201) zur Übertragung von Sensordaten an den Prozessor (103) ausgebildet ist.

14. Kommunikationssystem (100) nach Anspruch 13, wobei der Prozessor (103) ausgebildet ist, eine Charakteristik der empfangenen Sensordaten zu erfassen und die erfasste Charakteristik der empfangenen Sensordaten mit einer weiteren Referenzcharakteristik zu vergleichen, um die Anordnung des Kommunikationssystems (100) an dem Verbauort zu überprüfen.

15. Verfahren (300) zur V2X-Kommunikation mit einem Kommunikationssystem (100), das in einem Kraftfahrzeug an einem Verbauort verbaubar ist, mit:
Empfangen (301) von Kommunikationsdaten, wobei das Kommunikationssystem (100) einen V2X-Sender (105) umfasst, der zum Aussenden der empfangenen Kommunikationsdaten ausgebildet ist;
Erfassen (303) einer Charakteristik der empfangenen Kommunikationsdaten mit einem Prozessor (103), **gekennzeichnet durch**
Überprüfen (305) der Anordnung des Kommunikationssystems (100) an dem Verbauort auf der Basis eines Vergleichs der erfassten Charakteristik mit einer Referenzcharakteristik, wobei die Kommunikationsdaten durch den V2X-Sender (105) nicht ausgesendet werden, wenn der Prozessor (103) eine unzulässige Anordnung des Kommunikationssystems feststellt.

## Claims

1. A communications system (100) for V2X communication which is installable in an installation location in a motor vehicle, including:
a receiver (101) for receiving communications data;
a V2X transmitter (105) designed to transmit the received communications data; and
a processor (103) designed to detect a characteristic of the received communications data,
**characterized in that** the processor (103) is designed to verify the arrangement of the communications system (100) in the installation location based on a comparison of the detected characteristic and a reference characteristic, and wherein the V2X transmitter (105) is designed to not transmit the communications data when the processor (103) identifies an invalid arrangement of the communications system.

2. The communications system (100) according to any one of the preceding claims, wherein the characteristic of the received communications data and the reference characteristic are one of the following characteristics: data type, data ID, repetition rate of the communications data, data rate of the communications data, signal strength of the communications data.

3. The communications system (100) according to Claim 1 or 2, wherein the processor (103) is designed to identify an invalid arrangement of the communications system (100) when the characteristic of the received communications data differs from the reference characteristic.

4. The communications system (100) according to any one of the preceding claims, wherein the reference characteristic comprises a previously known signal, in particular an airbag signal, and wherein the processor (103) is designed to identify an invalid arrangement of the communications system (100) when the communications data comprise the previously known signal.

5. The communications system (100) according to any one of the preceding claims, wherein the reference characteristic comprises a further previously known signal and wherein the processor (103) is designed to identify an invalid arrangement of the communications system (100) when the communications data do not comprise the further previously known signal.

6. The communications system (100) according to any one of the preceding claims, wherein the received communications data comprise position data and wherein the characteristic of the communications data is a distance of the position data from the motor vehicle, in particular from the communications system (100) of the motor vehicle, and wherein the reference characteristic is a reference distance, wherein the processor (103) is designed to identify an invalid arrangement of the communications system (100) when the difference between the distance and the reference distance exceeds or falls short of a threshold value.

7. The communications system (100) according to any one of the preceding claims, wherein the processor (103) is designed to cyclically or continuously verify the arrangement of the communications system (100) in the installation location.

8. The communications system (100) according to any one of the preceding claims, wherein the receiver (101) is a BUS receiver or a V2X receiver.

9. The communications system (100) according to Claim 8, wherein the processor (103) is designed to sign the communications data with a PKI certificate before transmission as long as the processor (103) does not identify an invalid arrangement of the communications system (100), and to not sign the communications data with the PKI certificate before transmission when the processor (103) identifies an invalid arrangement of the communications system (100).

10. The communications system (100) according to Claim 9, wherein the communications system (100) comprises a memory (107) in which a number of PKI certificates for signing the communications data are stored, wherein the processor (103) is designed to delete the PKI certificates from the memory (107) upon identifying an invalid arrangement of the communications system (100).

11. The communications system (100) according to Claim 10, wherein the processor (103) is designed to delete the PKI certificates from the memory (107) after expiration of a certain time after identifying an invalid arrangement.

12. The communications system (100) according to any one of Claims 1 to 11, wherein the V2X transmitter (105) is designed to transmit an error message when the processor (103) identifies an invalid arrangement of the communications system (100).

13. The communications system (100) according to any one of the preceding claims, wherein the communications system (100) comprises a number of sensor elements (201), wherein the number of sensor elements (201) are designed for transferring sensor data to the processor (103).

14. The communications system (100) according to Claim 13, wherein the processor (103) is designed to detect a characteristic of the received sensor data and to compare the detected characteristic of the received sensor data to a further reference characteristic in order to verify the arrangement of the communications system (100) in the installation location.

15. A method (300) for V2X communication with a communications system (100) which is installable in an installation location in a motor vehicle, including:
receiving (301) communications data, wherein the communications system (100) comprises a V2X transmitter (105) designed to transmit the received communications data;
detecting (303) a characteristic of the received communications data with a processor (103),
**characterized by**
verifying (305) the arrangement of the communications system (100) in the installation location based on a comparison of the detected characteristic and a reference characteristic, wherein the communications data is not transmitted by the V2X transmitter (105) when the processor (103) identifies an invalid arrangement of the communications system.

## Revendications

1. Système de communication (100) pour la communication V2X, lequel peut être monté dans un véhicule à moteur à un emplacement de montage, avec :
un récepteur (101) pour la réception de données de communication ;
un émetteur V2X (105), lequel est formé pour l'émission des données de communication reçues ; et
un processeur (103), lequel est formé pour saisir une caractéristique des données de communication reçues,
**caractérisé en ce que** le processeur (103) est formé pour vérifier la disposition du système de communication (100) à l'emplacement de montage sur la base d'une comparaison de la caractéristique saisie avec une caractéristique de référence, et l'émetteur V2X (105) étant formé pour ne pas envoyer les données de communication lorsque le processeur (103) constate une disposition non autorisée du système de communication.

2. Système de communication (100) selon l'une des revendications précédentes, la caractéristique des données de communication reçues et la caractéristique de référence étant l'une des caractéristiques suivantes : type de donnée, identifiant de donnée, taux de répétition des données de communication, débit de données des données de communication, intensité de signal des données de communication.

3. Système de communication (100) selon la revendication 1 ou 2, le processeur (103) étant formé pour constater une disposition non autorisée du système de communication (100) lorsque la caractéristique des données de communication reçues est différente de la caractéristique de référence.

4. Système de communication (100) selon l'une des revendications précédentes, la caractéristique de référence comprenant un signal connu à l'avance, en particulier un signal d'airbag, et le processeur (103) étant formé pour constater une disposition non autorisée du système de communication (100) lorsque les données de communication comprennent le signal connu à l'avance.

5. Système de communication (100) selon l'une des revendications précédentes la caractéristique de référence comprenant un signal connu à l'avance supplémentaire, et le processeur (103) étant formé pour constater une disposition non autorisée du système de communication (100) lorsque les données de communication ne comprennent pas le signal connu à l'avance supplémentaire.

6. Système de communication (100) selon l'une des revendications précédentes, les données de communication reçues comprenant des données de position, et la caractéristique des données de communication étant une distance des données de position par rapport au véhicule à moteur, en particulier par rapport au système de communication (100) du véhicule à moteur, et la caractéristique de référence étant une distance de référence, le processeur (103) étant formé pour constater une disposition non autorisée du système de communication (100) lorsque la différence entre la distance et la distance de référence passe au-dessus ou en dessous d'une valeur seuil.

7. Système de communication (100) selon l'une des revendications précédentes, le processeur (103) étant formé pour vérifier de façon cyclique ou continue la disposition du système de communication (100) à l'emplacement de montage.

8. Système de communication (100) selon l'une des revendications précédentes, le récepteur (101) étant un récepteur BUS ou un récepteur V2X.

9. Système de communication (100) selon la revendication 8, le processeur (103) étant formé pour signer les données de communication avec un certificat PKI avant l'envoi si le processeur (103) ne constate pas une disposition non autorisée du système de communication (100), et les données de communication n'étant pas signées avec le certificat PKI avant l'envoi lorsque le processeur (103) constate une disposition non autorisée du système de communication (100).

10. Système de communication (100) selon la revendication 9, le système de communication (100) comprenant une mémoire (107) dans laquelle un certain nombre de certificats PKI pour la signature des données de communication sont enregistrés, le processeur (103) étant formé pour effacer de la mémoire (107) les certificats PKI en cas de constatation d'une disposition non autorisée du système de communication (100).

11. Système de communication (100) selon la revendication 10, le processeur (103) étant formé pour effacer de la mémoire (107) les certificats PKI après l'expiration d'une certaine durée, après constatation d'une disposition non autorisée.

12. Système de communication (100) selon l'une des revendications 1 à 11, l'émetteur V2X (105) étant formé pour envoyer un message d'erreur lorsque le processeur (103) constate une disposition non autorisée du système de communication (100).

13. Système de communication (100) selon l'une des revendications précédentes, le système de communication (100) comprenant un certain nombre d'éléments de détection (201), le nombre d'éléments de détection (201) étant formé pour la transmission de données de détection au processeur (103).

14. Système de communication (100) selon la revendication 13, le processeur (103) étant formé pour saisir une caractéristique des données de détection reçues et pour comparer la caractéristique des données de détection reçues saisie avec une caractéristique de référence supplémentaire, pour vérifier la disposition du système de communication (100) à l'emplacement de montage.

15. Procédé (300) pour la communication V2X avec un système de communication (100), lequel peut être monté dans un véhicule à moteur à un emplacement de montage, avec :
réception (301) de données de communication, le système de communication (100) comprenant un émetteur V2X (105), lequel est formé pour l'émission des données de communication reçues ;
saisie (303) d'une caractéristique des données de communication reçues avec un processeur (103), **caractérisé par**
la vérification (305) de la disposition du système de communication (100) à l'emplacement de montage sur la base d'une comparaison de la caractéristique saisie avec une caractéristique de référence, les données de communication n'étant pas envoyées par l'émetteur V2X (105) lorsque le processeur (103) constate une disposition non autorisée du système de communication.
